# EUROPEAN PATENT SPECIFICATION

(11) **EP 1 084 610 B1**
(45) Date of publication and mention of the grant of the patent: **31.03.2004**
(21) Application number: 01100039.5
(22) Date of filing: 01.07.1997
(51) Int. Cl.: A01J 5/017, A01K 1/12

(54) **A method and an implement for automatically milking animals**
Verfahren und Gerät zum automatischen Melken von Tieren
Méthode et appareil pour la traite automatique d'animaux

(30) Priority: 05.07.1996 EP 96201881
(43) Date of publication of application: 21.03.2001
(62) Divisional of application: 97929567.2
(73) Proprietor: MAASLAND N.V., 3147 PA Maassluis (NL)
(72) Inventor: Van den Berg, Karel, 2971 BR Bleskensgraaf (NL); Fransen, Renatus Ignatius Josephus, 3135 ZD Vlaardingen (NL)
(74) Representative: Corten, Maurice Jean F.M.

(56) References cited:
- EP-A- 0 313 109
- EP-A- 0 689 762
- DATABASE WPI Section PQ, Week 8950 Derwent Publications Ltd., London, GB; Class P13, AN 89-369035 XP002041890 & SU 1 484 333 A (N-CAUC CATTLE RES I), 7 June 1989 (1989-06-07)

## Description

The present invention relates to an implement for the automatically milking of animals, such as cows, according to the preamble of claim 1.

Such an implement is known from EP-A-0313109.

The invention aims at simplifying the milk unit construction.

In accordance with the invention, for that purpose, the implement comprises the features of the characterizing part of claim 1.

In accordance with a preferred embodiment of the invention the implement comprises the characterizing features of claim 2. In relation to the known implement it will thus be possible to reduce the number of degrees in the robot arm construction by one. Besides the means for moving the entire robot arm construction in the longitudinal direction of the milk box, it will suffice to provide control cylinders for pivoting the robot arm and moving same in height. By performing a pivoting movement from the side of the milk box there will moreover be obtained the advantage that the robot arm can be adjusted into a position enabling to connect, in a reliable manner, the teat cups to teats of the animal that are directed somewhat outwardly.

In accordance with the invention, it is possible to move the robot arm construction in the longitudinal direction of the milk box by providing the robot arm construction with a supporting unit movable along at one or more rail constructions in the longitudinal direction of the milk box, relative to which supporting unit the pivotable portion of the robot arm construction is pivotable in sideward direction. In that case the supporting unit may be designed so as to be movable along the rails by means of a motor. The sideward pivoting movement can be achieved by means of a control cylinder which is active between the supporting unit and the pivotable portion of the robot arm construction. By designing the pivotable portion of the robot arm construction as a carrier extending substantially downwardly to which the robot arm is coupled, it is possible to achieve the movability in height of the robot arm. In a particular embodiment, parallel to the control cylinder enabling the movability in height of the robot arm, there may be provided one or more guide rods for counteracting a rotating movement of the robot arm relative to the carrier.

Although the pivotal axis may constitute the centre line of a material axis about which the robot arm is capable of pivoting actually, it is possible to achieve an embodiment of the robot arm construction in which said pivotal axis is a virtual one. According to the invention, the robot arm construction is then provided with a supporting unit movable in the longitudinal direction of the milk box along at least one rail, as well as a quadrangle hinge construction by means of which the pivotable portion of the robot arm construction is pivotable sidewardly relative to the supporting unit.

In order to be able to perform a suitable sideward pivoting movement of the robot arm, the pivotal axis for the robot arm is preferably located approximately in the middle above the milk box.

There may be provided several milk boxes arranged behind each other; in that case, the rail constructions for the robot arm construction will extend along these milk boxes or there above.

For a better understanding of the invention, reference will now be made to the accompanying drawings, in which:
Figure 1 shows a side view of a robot arm construction;
Figure 2 is a front view of a milk box in which the robot arm construction of Figure 1 is shown schematically; and
Figure 3 shows an other embodiment of such a robot arm construction in which the pivotal axis is a virtual one.

In the drawings corresponding parts are designated by the same reference numerals.

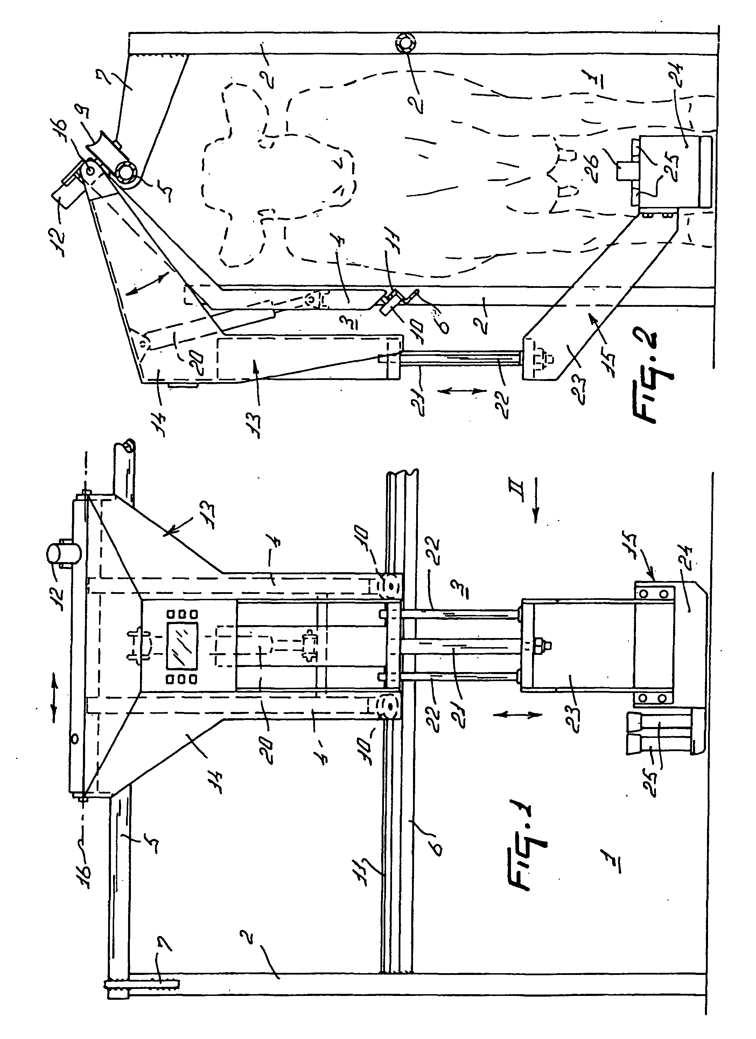

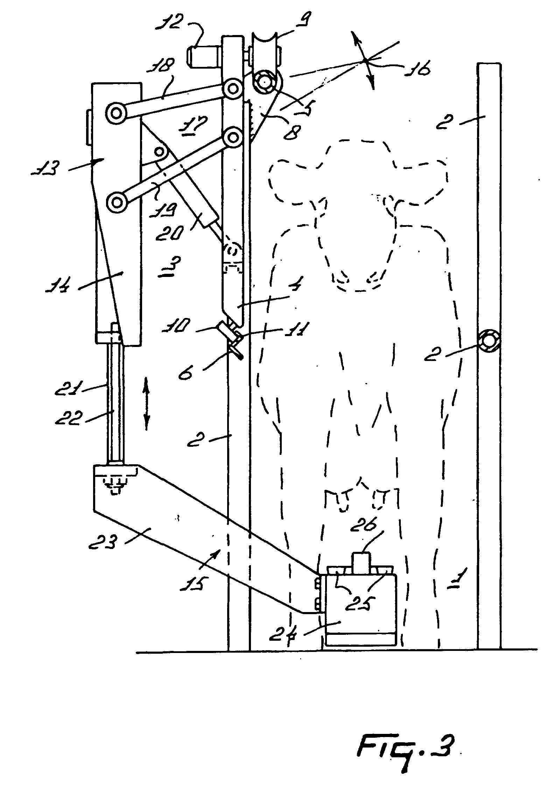

The milk box 1 shown in Figures 1 to 3 accommodates one single animal. Said milk box is surrounded in a customary manner by a fencing 2 and provided with a (non-shown) entrance and exit door. In the milk box and in the immediate vicinity thereof there is provided an automatic milking machine which, besides the usual milking equipment, includes a milking robot for automatically connecting teat cups to the teats of an animal to be milked which is present in the milk box, automatically milking said animal and automatically disconnecting the teat cups from the teats. The milking robot comprises a robot arm construction 3 movable in the longitudinal direction of the milk box 1. Said robot arm construction is provided with a supporting unit 4 which is movable along rails 5 and 6. In Figures 1 and 2, the rail 5 is tubular and disposed in the middle above the milk box 1 in the longitudinal direction thereof by means of supports 7 attached to the fencing 2. In Figure 3, the rail 5 is also tubular but disposed on the side of the upper side of the milk box 1 in the longitudinal direction thereof by means of supports 8 attached to the fencing 2 at the longitudinal side of the milk box where the robot arm construction is located. In all the Figures 1 to 3, the rail 6 is disposed approximately half-way the height of the milk box at the longitudinal side of the fencing 2, i.e. at the side where the robot arm construction is located. The rail 6 is constituted by an angle section whose abutment face over which the supporting unit 4 can be moved is located at an angle of approximately 45° obliquely downwards and outwards relative to the milk box 1. Both at its upper side and its under side the supporting unit 4 is provided with rollers 9 and 10. In Figures 1 and 2, the rollers 9 and 10 are attached to the supporting unit 4 perpendicularly to each other and at an angle of approximately 45° relative to a vertical plane in the longitudinal direction of the milk box, in such a manner that the supporting unit 4 is supported on the rail 5 by means of the rollers 9 and on the rail 6 by means of the rollers 10. In order to prevent the supporting unit 4 from being pushed from the rails 5 and 6, there are provided locking means, e.g. constituted by an upright edge 11 provided on the rail 6 or constituted by additional (non-shown) rollers, also attached to the supporting unit 4 and arranged diametrically opposite the rollers 9 relative to the rail 5, the rail 5 thus extending between the rollers. The supporting unit 4 is capable of being moved along the rails 5 and 6 by means of a motor 12.

The robot arm construction is furthermore provided with a sidewardly pivotable portion 13 comprising a carrier 14 extending substantially downwardly and a robot arm 15 attached thereto. The sidewardly pivotable portion 13 and consequently also the robot arm 15 are pivotable about a substantially horizontal pivotal axis 16 which is located at the upper side of the milk box or near thereto in the longitudinal direction thereof. Although, in Figures 1 and 2 as well as in Figure 3 the pivotal axis 16 is located approximately in the middle above the milk box, in Figures 1 and 2 said pivotal axis constitutes the centre line of the material pivotal axis for the sidewardly pivotable portion 13, while in Figure 3 said pivotal axis is a virtual one which, moreover, during the pivoting movement of the sidewardly pivotable portion 13, moves upwardly. In Figures 1 and 2, the pivotal axis 16 and the centre line of the rail 5 are located in a substantially vertical plane. In the embodiment of Figure 3, the sidewardly pivotable portion 13 is connected with the supporting unit 4 by means of a quadrangle hinge construction 17, composed of arms 18 and 19, the distance between the hinge points of said arms on the carrier 14 being larger than the distance between the hinge points of these arms on the supporting unit 4.

As described so far, the sideward pivoting movement of the portion 13 is achieved by means of a control cylinder 20 which is disposed between said pivotable portion 13 and the supporting unit 4. As already mentioned, the sidewardly pivotable portion 13 comprises the carrier 14 and the robot arm 15. The robot arm 15 is connected movably in height with the carrier 14 by means of a control cylinder 21. Parallel to this control cylinder 21 there are provided one or more guide rods 22 for counteracting a rotating movement of the robot arm 15 about an axis in the longitudinal direction of the control cylinder 21 relative to the carrier 14.

The robot arm 15 comprises a portion 23 extending obliquely downwards in the direction of the milk box and a portion 24 extending horizontally. The latter portion 24 may be produced as the end piece of the robot arm construction as described in EP-A-O 360 354 or in EP-A-O 519 544, the description of this end piece as well as its function being considered to be inserted here. Said end piece is adapted to serve as a carrier for the teat cups 25 and for the detector 26 by means of which the position of the teats can be determined.

In order to make it possible for an animal to enter the milk box 1 without damaging the milking robot, the sidewardly pivotable portion 13 of the robot arm construction is pivotable outwardly to such an extent that the robot arm 15 is located almost entirely outside the milk box 1. When an animal is present in the milk box and the teat cups 25 have to be connected, the robot arm construction 3 has first to be moved by means of the motor 12 in the longitudinal direction of the milk box to such an extent, i.e. into a position in which the robot arm 15 has pivoted entirely or almost entirely outside the milk box, that, by means of the control cylinder 20, the robot arm 15 can be pivoted under the animal into a position in which the detector 26 is capable of determining the position of the teats. By subsequently operating the motor 12 and the control cylinders 20 and 21, it will be possible to connect the teat cups 25 to the teats. After milking, the teat cups may be disconnected from the teats in the way described in the aforementioned EP-A-O 360 354. When adjusting a teat cup into the right position for connecting same to a relevant teat, the pivotability of the robot arm 15 about the pivotal axis 16 may be of great advantage when the teats of the animal are directed somewhat outwardly; a situation which occurs in particular when relatively much time has elapsed since the previous milking run.

It is possible to arrange two or more milk boxes behind each other. In that situation, the entrance and the exit of the milk boxes have to be disposed at the longitudinal side facing the one where the robot arm construction is located. In that case, the rails 5 and 6 for the robot arm construction 3 have to extend along all these milk boxes or there above, so that the robot arm construction can be moved along one and the same rail from a position at the side of a milk box located there behind or in front thereof into an other position at the side of an other milk box located there behind or in front thereof. It is also possible to arrange the milk boxes in a circle or in a carrousel. In that situation, the rails 5 and 6 along which the robot arm construction is then movable have to extend along the circle or carrousel or there above.

Finally it is noticed that the milking robot comprises a computer for controlling the automatic connection of the teat cups, the automatic milking of the animals and the automatic disconnection of the teat cups after milking. In particular the above-described possibilities of movement of the robot arm 15 of the robot arm construction 3 are under control of the computer; in other words, the motors 12 and 31 and the control cylinders 20 and 21 are computer-controlled.

## Claims

1. An implement for automatically milking animals, such as cows, said implement comprising a milk box, said milk box being surrounded by a fencing and said implement comprising an automatic milking machine which includes a milking robot for automatically connecting teat cups to the teats of an animal, said milking robot comprising a robot arm construction sustaining a unit to carry teat cups for the milking of the cows, said robot arm construction being attached to the fencing, **characterized in that** said robot arm construction sustaining the unit mainly from one side of the milk box has in the direction seen from the front the configuration of a "C".

2. An implement as claimed in claim 1, **characterized in that** the robot arm construction is hingeable connected to the fencing in such a way, that the unit is moveable in about a horizontal direction forwardly and backwardly about one or more hinges extending near the upper part of the animal.

3. An implement as claimed in claim 2, **characterized in that** the robot arm construction (3) is provided with a supporting unit movable along at one or more rail constructions in the longitudinal direction of the milk box (1), whereby the supporting unit (4) is pivotable.

4. An implement as claimed in claim 3, **characterized in that** there are provided at least two rail constructions.

5. An implement as claimed in claim 3 or 4, **characterized in that** the supporting unit (4) is movable along two rails (5, 6) disposed at different heights on the fencing (2) of the milk box (1).

6. An implement as claimed in claim 3, 4 or 5, **characterized in that** the robot arm construction (3) comprises a sidewardly pivotable portion (13) which is capable of pivoting in sideward direction relative to the milk box (1) by means of a control cylinder (20) disposed between said pivotable portion (13) and the supporting unit (4).

7. An implement as claimed in any one of the preceding claims, **characterized in that** the robot arm construction (3) comprises a carrier (14) for a robot arm (15), which carrier (14) is pivotable about the pivotal axis (16) and extends substantially downwardly.

8. An implement as claimed in claim 7, **characterized in that** the robot arm (15) is connected movably in height with the carrier (14).

9. An implement as claimed in claim 8, **characterized in that** the robot arm (15) is movable in height relative to the carrier (14) by means of a control cylinder (21) disposed between the robot arm (15) and the carrier (14).

## Patentansprüche

1. Vorrichtung zum automatischen Melken von Tieren, wie z. B. Kühen, wobei die Vorrichtung eine Melkbox umfaßt, wobei die Melkbox von einer Einfassung umgeben ist, und wobei die Vorrichtung eine automatische Melkmaschine umfaßt, die einen Melkroboter zum automatischen Anschließen von Zitzenbechern an die Zitzen eines Tieres enthält, wobei der Melkroboter eine Roboterarm-Konstruktion umfaßt, an der eine Einheit abgestützt ist, welche Zitzenbecher zum Melken der Kühe trägt, wobei die Roboterarmkonstruktion an der Einfassung angebracht ist,
**dadurch gekennzeichnet, daß** die Roboterarm-Konstruktion, die die Einheit hauptsächlich auf einer Seite der Melkbox abstützt, in der Vorderansicht die Form eines "C" hat.

2. Vorrichtung nach Anspruch 1,
**dadurch gekennzeichnet, daß** die Roboterarm-Konstruktion gelenkig mit der Einfassung in der Weise verbunden ist, daß die Einheit in annähernd horizontaler Richtung um eine oder mehrere sich nahe dem oberen Teil des Tieres erstreckende Gelenkachsen nach vorn und nach hinten bewegbar ist.

3. Vorrichtung nach Anspruch 2,
**dadurch gekennzeichnet, daß** die Roboterarm-Konstruktion (3) mit einer Trageinheit versehen ist, die auf einer oder mehreren Schienenkonstruktionen in Längsrichtung der Melkbox (1) bewegbar ist, wobei die Trageinheit (4) schwenkbar ist.

4. Vorrichtung nach Anspruch 3,
**dadurch gekennzeichnet, daß** mindestens zwei Schienenkonstruktionen vorgesehen sind.

5. Vorrichtung nach Anspruch 3 oder 4,
**dadurch gekennzeichnet, daß** die Trageinheit (4) auf zwei Schienen (5, 6) bewegbar ist, die in unterschiedlicher Höhe an der Einfassung (2) der Melkbox (1) angebracht sind.

6. Vorrichtung nach Anspruch 3, 4 oder 5,
**dadurch gekennzeichnet, daß** die Roboterarm-Konstruktion (3) einen seitwärts schwenkbaren Abschnitt (13) umfaßt, der in seitlicher Richtung relativ zu der Melkbox (1) mit Hilfe eines Steuerzylinders (20) schwenkbar ist, der zwischen dem schwenkbaren Abschnitt (13) und der Trageinheit (4) angeordnet ist.

7. Vorrichtung nach einem der vorhergehenden Ansprüche,
**dadurch gekennzeichnet, daß** die Roboterarm-Konstruktion (3) einen Träger (14) für einen Roboterarm (15) umfaßt, wobei der Träger (14) um die Schwenkachse (16) schwenkbar ist und sich im wesentlichen nach unten erstreckt.

8. Vorrichtung nach Anspruch 7,
**dadurch gekennzeichnet, daß** der Roboterarm (15) höhenbewegbar mit dem Träger (14) verbunden ist.

9. Vorrichtung nach Anspruch 8,
**dadurch gekennzeichnet, daß** der Roboterarm (15) relativ zu dem Träger (14) mittels eines Steuerzylinders (21) höhenbewegbar ist, der zwischen dem Roboterarm (15) und dem Träger (14) angeordnet ist.

## Revendications

1. Outil pour la traite automatique d'animaux, tels que des vaches, ledit outil comprenant un box de traite, ledit box de traite était entouré par une clôture et ledit outil comprenant une machine à traire automatique qui comprend un robot de traite permettant de connecter automatiquement les gobelets trayeurs aux trayons d'un animal, ledit robot de traite comprenant une construction formant bras robotisé soutenant une unité pour transporter les gobelets trayeurs pour la traite des vaches, ladite construction formant bras robotisé étant fixée à la clôture, **caractérisé en ce que** ladite construction formant bras robotisé soutenant l'unité principalement d'un côté du box de traite a, dans la direction vue de l'avant, la configuration d'un « C ».

2. Outil selon la revendication 1, **caractérisé en ce que** la construction formant bras robotisé est connectée à la clôture de manière pivotante de telle sorte que l'unité est mobile, dans une direction approximativement horizontale, vers l'avant et vers l'arrière autour d'une ou plusieurs articulations s'étendant à proximité de la partie supérieure de l'animal.

3. Outil selon la revendication 2, **caractérisé en ce que** la construction formant bras robotisé (3) est pourvue d'une unité de support déplaçable le long d'une ou plusieurs constructions de rail dans la direction longitudinale du box de traite (1), moyennant quoi l'unité de support (4) est orientable.

4. Outil selon la revendication 3, **caractérisé en ce qu'**au moins deux constructions de rail sont prévues.

5. Outil selon la revendication 3 ou 4, **caractérisé en ce que** l'unité de support (4) est déplaçable le long de deux rails (5, 6) disposés à différentes hauteurs sur la clôture (2) du box de traite (1).

6. Outil selon la revendication 3, 4 ou 5, **caractérisé en ce que** la construction formant bras robotisé (3) comprend une partie orientable latéralement (13) pouvant pivoter dans la direction latérale par rapport au box de traite (1) au moyen d'un cylindre de commande (20) disposé entre ladite partie orientable (13) et l'unité de support (4).

7. Outil selon l'une quelconque des revendications précédentes, **caractérisé en ce que** la construction formant bras robotisé (3) comprend un support (14) pour un bras robotisé (15), lequel support (14) est orientable autour de l'axe de pivot (16) et s'étend sensiblement vers le bas.

8. Outil selon la revendication 7, **caractérisé en ce que** le bras robotisé (15) est connecté de manière mobile en hauteur avec le support (14).

9. Outil selon la revendication 8, **caractérisé en ce que** le bras robotisé (15) est mobile en hauteur par rapport au support (14) au moyen d'un cylindre de commande (21) disposé entre le bras robotisé (15) et le support (14).
